# EUROPÄISCHE PATENTSCHRIFT

(11) **EP 1 159 165 B1**
(45) Veröffentlichungstag und Bekanntmachung des Hinweises auf die Patenterteilung: **04.09.2002**
(21) Anmeldenummer: 00916795.8
(22) Anmeldetag: 03.03.2000
(51) Int. Cl.: B60R 21/18

(54) **RÜCKHALTEGURT FÜR INSASSEN VON VERKEHRSMITTELN MIT EINEM IM BECKENBEREICH ANGEORDNETEM AIRBAGMODUL**
RESTRAINT BELT FOR OCCUPANTS OF TRANSPORTATION MEANS HAVING AN AIR BAG MODULE WHICH IS ARRANGED IN THE PELVIC AREA
CEINTURE DE RETENUE POUR LES PASSAGERS DE VEHICULES COMPRENANT UN MODULE COUSSIN GONFLABLE SITUE AU NIVEAU DU BASSIN DU PASSAGER

(30) Priorität: 09.03.1999 DE 19911681
(43) Veröffentlichungstag der Anmeldung: 05.12.2001
(73) Patentinhaber: Takata-Petri AG, 63743 Aschaffenburg (DE)
(72) Erfinder: ADOMEIT, Heinz-Dieter, D-10623 Berlin (DE); BRAUN, Eleonore, D-13505 Berlin (DE)
(74) Vertreter: Baumgärtel, Gunnar, Dr.
(86) Internationale Anmeldenummer: DE0000683
(87) Internationale Veröffentlichungsnummer: WO00053461

(56) Entgegenhaltungen:
- DE-A- 1 902 793
- DE-A- 4 306 528
- GB-A- 2 262 720
- US-A- 3 706 462

## Beschreibung

Die Erfindung betrifft einen Rückhaltegurt für Insassen von Verkehrsmitteln nach dem Oberbegriff des Anspruchs 1.

Ein derartiger Rückhaltegurt ist aus der Gb 2 262 720 bekannt.

Aus den US-PS 3 866 940, DE-OS 2 358 070 sowie DE 94 18 721 U1 sind Dreipunkt-Rückhaltegurte für Kraftfahrzeuge bekannt, bei denen auf dem Beckengurt jeweils ein Airbag angebracht ist. Der Beckengurt verläuft dabei von einer Halterung an der Außenseite des Kraftfahrzeuges zum Gurtschloß. Dort wird der Beckengurt umgelenkt und setzt sich im Schultergurt fort, der im Aufrollautomaten endet.

Diese Anordnungen weisen den Nachteil auf, daß der Beckengurt bei Auslösung des Airbags mit diesem vom Insassen wegbewegt wird, so daß die Rückhaltewirkung des Gurtsystems aufgehoben ist. Es ist sogar möglich, daß dadurch ein "Durchrutschen" (Submarining) des Insassen verursacht wird. Der gleiche Nachteil tritt ein, wenn ein bisher üblicher standardgemäßer Beckengurt verwendet wird.

Der Erfindung liegt die Aufgabe zugrunde, bei einem Rückhaltegurt mit Airbag die Rückhaltewirkung des Gurtes zumindest zu erhalten.

Erfindungsgemäß wird das gemäß den Merkmalen des Anspruchs 1 erreicht.

Bei einem Rückhaltegurt für Insassen von Kraftfahrzeugen mit einem im Beckenbereich des Insassen angeordneten Airbagmodul verläuft der Rückhaltegurt im Beckenbereich des Insassen als Doppelgurt, dessen erster Abschnitt am Körper des Insassen direkt anliegt, während der zweite Abschnitt zumindest teilweise an der dem Körper des Insassen abgewandten Seite des ersten Abschnitts anliegt, wobei der Gurt an einer Gurtumlenkung vom ersten in den zweiten Abschnitt übergeht, und wobei das Airbagmodul an dem zweiten Abschnitt des Doppelgurtes angebracht ist.

Durch diese erfindungsgemäße Anordnung wird erreicht, daß sich zwar der zweite Abschnitt des Rückhaltegurtes, der zumindest teilweise vor bzw. über dem ersten Abschnitt liegt, mit dem daran befestigten Airbag durch dessen Reaktionskräfte während der Entfaltungsphase vom Insassen wegbewegt. Gleichzeitig wird aber der erste Abschnitt dabei gestrafft. Durch diesen Doppelgurt wird also neben der positiven Wirkung des Airbags ein Straffereffekt beim Rückhaltegurt erzielt.

Dieses erfindungsgemäße Rückhaltesystem ist auf allen Sitzen im PKW, LKW und Bussen und Flugzeugen einsetzbar. Insbesondere auf den Rücksitzen im PKW und auf Sitzen in Bussen gibt es bisher entweder keine oder unzureichende Rückhaltesysteme. Das trifft auch für den Fahrersitz in Bussen und LKW zu, bei denen sich die Lenksäule in sehr steilem Winkel befindet, so daß die bekannten Airbagsysteme unzureichend funktionieren können.

Der Rückhaltegurt ist in einer Ausführungsform so angeordnet, daß der Doppelgurt über die Oberschenkel des Insassen verläuft und daß der erste und der zweite Abschnitt übereinanderliegen. Dadurch wird erreicht, daß sich der Airbag im Thoraxbereich im wesentlichen senkrecht nach oben entfaltet, so daß er einerseits den Insassen nicht anschießt, andererseits aber auch nicht durch Fahrzeugbaugruppen in seiner Ausbreitung behindert wird.

In einer Ausführungsform ist ein Dreipunktgurt vorgesehen, bei dem im Bereich des am üblichen Ort angeordneten Gurtschlosses eine Gurtumlenkung vorgesehen ist, an der der Schulterabschnitt des Gurtes in den ersten Abschnitt des Beckengurtes übergeht.

Der Rückhaltegurt kann aber auch lediglich als Beckengurt ausgebildet sein. In diesem Fall ist die Gurtumlenkung für den Übergang des ersten in den zweiten Abschnitt am Gurtschloß vorgesehen.

Das Airbagmodul ist zweckmäßig auf dem zweiten Abschnitt des Beckengurtes mittels einer Tasche befestigt, die auf den genannten zweiten Abschnitt zwischen zwei Fixpunkten aufgezogen ist, d.h. das Airbagmodul ist zwischen diesen Fixpunkten angeordnet. In einer weiteren Ausgestaltung ist vorgesehen, daß die Fixpunkte in ihrer Lage verschiebbar sind. Damit ist es möglich, das Airbagmodul seitlich zu verschieben und dessen Lage an Insassen unterschiedlicher Körpergröße anzupassen.

Weiterhin ist es zweckmäßig, daß der Gasgenerator abseits vom Rückhaltegurt befestigt ist und über eine Gaszuleitung mit dem Airbag verbunden ist. Der Gasgenerator kann z.B. unter dem Sitz oder am Sitz, an der Karosserie, auf dem Boden oder im Kofferraum angeordnet sein.

Die Erfindung soll in Ausführungsbeispielen an Hand von Zeichnungen erläutert werden. Es zeigen.
- Fig. 1: eine Vorderansicht eines Insassen mit einem angelegten Dreipunktgurt;
- Fig. 2: eine Vorderansicht eines Insassen mit angelegtem Beckengurt.

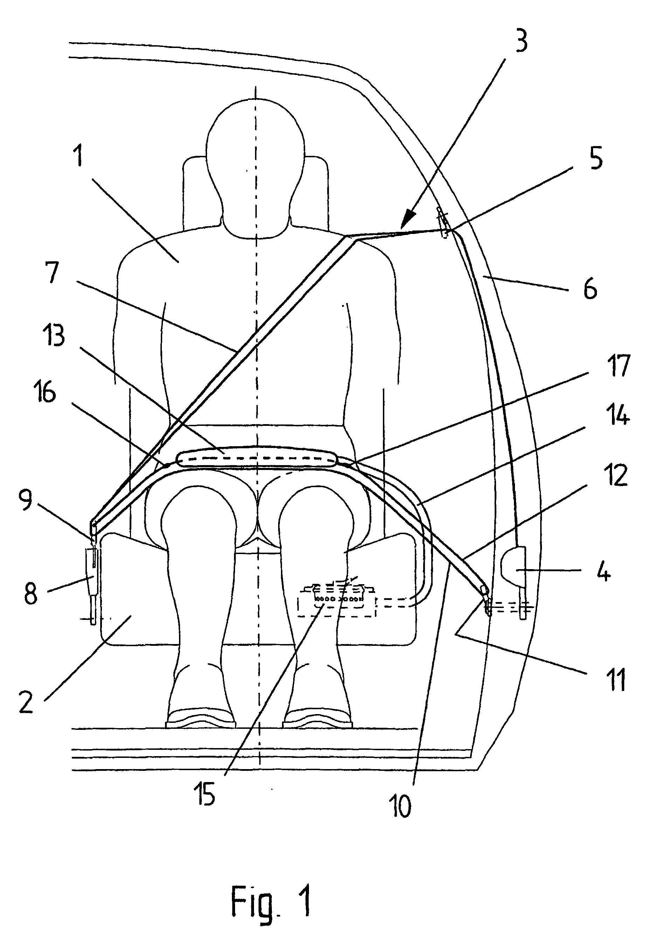

In der Fig. 1 ist ein Insasse 1 in einem Kraftfahrzeug dargestellt, dessen Sitzposition auf einem Sitz 2 mittels eines Dreipunktgurtes 3 gesichert ist. Der Dreipunktgurt verläuft ausgehend von einem Aufrollautomaten 4 über eine Gurtumlenkung 5, die an der B-Säule 6 oder C-Säule befestigt ist, zum Inssassen 1. Ein Schulterabschnitt 7 des Dreipunktgurtes 3 verläuft dabei in bekannter Weise von einer Schulter diagonal über den Oberkörper zu einem Gurtschloß 8. Dort wird der Gurt in einer Gurtumlenkung 9 umgelenkt und verläuft als ein erster Abschnitt 10 eines Doppelgurtes im Beckenbereich über die Oberschenkel des Insassen zu einer weiteren Gurtumlenkung 11. Nach erneuter Umlenkung verläuft der Gurt mit einem zweiten Abschnitt 12 oberhalb des ersten Abschnittes 10 zum Gurtschloß 8 zurück. Das Ende des zweiten Abschnitts ist dort befestigt.

Auf dem über dem ersten Abschnitt 10 liegenden zweiten Abschnitt 12 ist ein Airbagmodul 13 befestigt. Dieses besteht aus einer Tasche, die zwischen zwei in ihrer Lage festen oder verschiebbaren Fixpunkten 16, 17 angeordnet ist, und in der ein in der Figur nicht erkennbarer Airbag angeordnet ist. Der Airbag ist über eine Gaszuleitung 14 mit einem im Bereich des Sitzes 2 angeordneten Gasgenerator 15 verbunden.

Nach Zündung des Gasgenerators 15 wird durch die Reaktionskräfte des Airbags während der Entfaltungsphase der oben liegende zweite Abschnitt 12 des Doppelgurtes mit dem Airbagmodul vom Insassen wegbewegt. Da der obere zweite Abschnitt 12 über die Gurtumlenkung 11 in den unteren ersten Abschnitt 10 übergeht, wird dieser somit gestrafft. Damit wird verhindert, daß der Insasse unter den Beckengurt hindurchrutscht. Da der erste Abschnitt 10 an der Umlenkung 9 am Gurtschloß 8 in den Schulterabschnitt 7 übergeht, wird auch dieser Abschnitt gestrafft, so daß der Insasse in seiner Sitzposition zusätzlich gesichert ist.

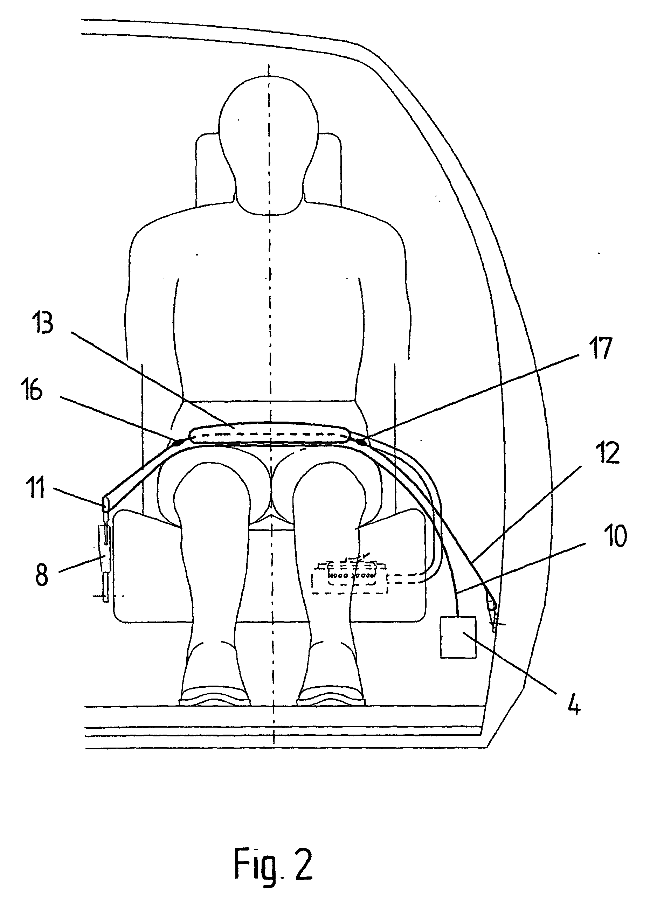

Beim Ausführungsbeispiel der Fig. 2 ist der Fahrzeuginsasse nur durch einen Beckengurt gesichert, der als Doppelgurt ausgebildet ist. Dieser Doppelgurt weist ebenfalls einen ersten Abschnitt 10 auf, der vom Aufrollautomaten 4 ausgeht und an der Gurtumlenkung 11, die am Gurtschloß 8 vorgesehen ist, in den zweiten Abschnitt 12 übergeht, der über dem ersten Abschnitt 10 liegt und dessen Ende im Bereich des Aufrollautomaten 4 am Kraftfahrzeug befestigt ist. Das Airbagmodul 13 ist wie beim Ausführungsbeispiel der Fig. 1 am zweiten Abschnitt befestigt. Die Wirkungsweise entspricht dem Doppelgurt des Ausführungsbeispiels der Fig. 1.

## Patentansprüche

1. Rückhaltegurt für Insassen von Verkehrsmitteln mit einem im Beckenbereich des Insassen angeordneten Airbagmodul,
**dadurch gekennzeichnet,**
**daß** der Rückhaltegurt im Beckenbereich des Insassen als Doppelgurt verläuft, dessen erster Abschnitt (10) am Körper des Insassen (1) direkt anliegt, während der zweite Abschnitt (12) zumindest teilweise an der dem Körper des Insassen (1) abgewandten Seite des ersten Abschnitts (10) anliegt, wobei der Gurt an einer Gurtumlenkung (11) vom ersten (10) in den zweiten Abschnitt (12) übergeht, und daß das Airbagmodul (13) an dem zweiten Abschnitt (12) des Doppelgurtes angebracht ist.

2. Rückhaltegurt nach Anspruch 1, **dadurch gekennzeichnet, daß** der Doppelgurt über die Oberschenkel des Insassen (1) verläuft und daß der erste (10) und der zweite Abschnitt (12) übereinanderliegen.

3. Rückhaltegurt nach Anspruch 1 oder 2, **dadurch gekennzeichnet, daß** ein Dreipunktgurt (3) vorgesehen ist, bei dem im Bereich des am üblichen Ort angeordneten Gurtschlosses (8) eine Gurtumlenkung (9) vorgesehen ist, an der der Schulterabschnitt (7) des Gurtes in den ersten Abschnitt (10) des Beckengurtes übergeht.

4. Rückhaltegurt nach Anspruch 1 oder 2, **dadurch gekennzeichnet, daß** ein Beckengurt vorgesehen ist, bei dem die Gurtumlenkung (11) für den Übergang des ersten (10) in den zweiten Abschnitt (12) am Gurtschloß vorgesehen ist.

5. Rückhaltegurt nach mindestens einem der vorhergehenden Ansprüche, **dadurch gekennzeichnet, daß** das Airbagmodul (13) auf dem zweiten Abschnitt (12) des Beckengurtes mittels einer Tasche befestigt ist, die auf den genannten zweiten Abschnitt, (12) aufgezogen ist.

6. Rückhaltegurt nach mindestens einem der vorhergehenden Ansprüche, **dadurch gekennzeichnet, daß** das Airbagmodul zwischen zwei Fixpunkten (16, 17) angeordnet ist.

7. Rückhaltegurt nach Anspruch 6, **dadurch gekennzeichnet, daß** die Fixpunkte (16, 17) in ihrer Lage verschiebbar sind.

8. Rückhaltegurt nach mindestens einem der vorhergehenden Ansprüche, **dadurch gekennzeichnet, daß** der Gasgenerator (15) abseits vom Rückhaltegurt angeordnet ist und mit dem Airbag über eine Gaszuleitung (14) verbunden ist.

9. Rückhaltegurt nach mindestens einem der vorhergehenden Ansprüche, **dadurch gekennzeichnet, daß** der Gasgenerator unter dem Sitz (2) oder am Sitz (2), an der Karosserie, auf dem Boden oder im Kofferraum angeordnet ist.

## Claims

1. Restraint belt for occupants of transportation means having an airbag module which is arranged in the pelvic area of the occupant, **characterized in that** the restraint belt runs in the pelvic area of the occupant as a double belt whose first section (10) bears directly on the body of the occupant (1), whereas the second section (12) bears at least partially on that side of the first section (10) which faces away from the body of the occupant (1), the belt merging from the first section (10) into the second section (12) at a belt-deflecting point (11), and **in that** the airbag module (13) is fitted to the second section (12) of the double belt.

2. Restraint belt according to Claim 1, **characterized in that** the double belt runs over the thighs of the occupant (1), and **in that** the first section (10) and the second section (12) lie one above the other.

3. Restraint belt according to Claim 1 or 2, **characterized in that** a three-point belt (3) is provided, in which a belt-deflecting point (9) is provided in the region of the belt buckle (8), which is arranged at the customary location, and at the said belt-deflecting point the shoulder section (7) of the belt merges into the first section (10) of the pelvic belt.

4. Restraint belt according to Claim 1 or 2, **characterized in that** a pelvic belt is provided, in which the belt-deflecting point (11) for the transition of the first section (10) into the second section (12) is provided on the belt buckle.

5. Restraint belt according to at least one of the preceding claims, **characterized in that** the airbag module (13) is fastened on the second section (12) of the pelvic belt by means of a pocket which is pulled on to the said second section (12).

6. Restraint belt according to at least one of the preceding claims, **characterized in that** the airbag module is arranged between two fixing points (16, 17).

7. Restraint belt according to Claim 6, **characterized in that** the fixing points (16, 17) can be displaced in their position.

8. Restraint belt according to at least one of the preceding claims, **characterized in that** the gas generator (15) is arranged to one side of the restraint belt and is connected to the airbag via a gas supply line (14).

9. Restraint belt according to at least one of the preceding claims, **characterized in that** the gas generator is arranged under the seat (2) or on the seat (2), on the vehicle body, on the floor or in the boot.

## Revendications

1. Ceinture de retenue pour les passagers de véhicules comprenant un module d'airbag situé au niveau du bassin du passager, **caractérisée en ce que** la ceinture de retenue au niveau du bassin du passager s'étend sous forme de ceinture double dont le premier tronçon (10) s'applique directement contre le corps du passager (1) tandis que le deuxième tronçon (12) s'applique du moins partiellement contre le côté du premier tronçon (10) qui est détourné du corps du passager (1), la ceinture se transformant, au niveau d'un renvoi de ceinture (11), du premier tronçon (10) dans le deuxième tronçon (12), et **en ce que** le module d'airbag (13) est agencé sur le deuxième tronçon (12) de la ceinture double.

2. Ceinture de retenue selon la revendication 1, **caractérisée en ce que** la ceinture double s'étend sur les cuisses du passager (1), et **en ce que** le premier tronçon (10) et le deuxième tronçon (12) se trouvent l'un sur l'autre.

3. Ceinture de retenue selon l'une ou l'autre des revendications 1 et 2, **caractérisée en ce qu'**il est prévu une ceinture (3) à trois points, dans laquelle est prévu un renvoi de ceinture dans la zone de la serrure de ceinture (8) agencée à l'endroit habituel, renvoi au niveau duquel le tronçon d'épaule (7) de la ceinture se transforme dans le premier tronçon (10) de la ceinture de bassin.

4. Ceinture de retenue selon l'une ou l'autre des revendications 1 et 2, **caractérisée en ce qu'**il est prévu une ceinture de bassin dans laquelle le renvoi de ceinture (11) pour la transition du premier tronçon (10) en le deuxième tronçon (12) est prévu au niveau de la serrure de ceinture.

5. Ceinture de retenue selon l'une au moins des revendications précédentes, **caractérisée en ce que** le module d'airbag (13) est fixé sur le deuxième tronçon (12) de la ceinture de bassin au moyen d'une poche qui est enfilée sur ledit deuxième tronçon (12).

6. Ceinture de retenue selon l'une au moins des revendications précédentes, **caractérisée en ce que** le module d'airbag est agencé entre deux points fixes (16, 17).

7. Ceinture de retenue selon la revendication 6, **caractérisée en ce que** les points fixes (16, 17) sont déplaçables dans leur position.

8. Ceinture de retenue selon l'une au moins des revendications précédentes, **caractérisée en ce que** le générateur de gaz (15) est agencé à l'extérieur de la ceinture de retenue et est relié à l'airbag via une conduite d'amenée de gaz (14).

9. Ceinture de retenue selon l'une au moins des revendications précédentes, **caractérisée en ce que** le générateur de gaz est agencé au-dessous du siège (2) ou sur le siège (2), sur la carrosserie, sur le plancher ou dans le coffre.
